# EUROPEAN PATENT APPLICATION

(11) **EP 2 166 714 A1**
(43) Date of publication of application: **24.03.2010**
(21) Application number: 08305571.5
(22) Date of filing: 19.09.2008
(51) Int. Cl.: H04L 12/56, H04W 72/00

(54) **Radio resource management method and apparatus for implementing the method**

(71) Applicant: Alcatel Lucent, 75008 Paris (FR)
(72) Inventor: Stephen, Virginie, 91440, BURES SUR YVETTE (FR); Baudry, Benjamin, 78960, VOISINS (FR)
(74) Representative: Ameline, Jean-Paul B.C.

(57) **Abstract**

The invention proposes a method for managing radio resources, in a radio- communication infrastructure network comprising a network element capable of controlling calls established between the infrastructure network and radio terminals, whereby at least some of the calls use transmission on shared communication channels. The method comprises the following steps: assigning a first weight factor to at least one established call (301) which uses transmission on shared communication channels, wherein the first weight factor is selected according to the type of service provided and/or the user priority for the call; obtaining a first estimate value of radio resources used (302) by the at least one established call from the first weight factor assigned to the call based on predetermined correspondences between weight factors and estimate values of radio resources required to service a call; and determining a second estimate value of radio resources used (303) by established calls which use transmission on shared communication channels by using at least one obtained first estimate value of used radio resources.

## Description

The present invention relates to a method for managing radio resources in a radio-communication network and apparatus for implementing the method.

The term "radio-communication network" as used herein refers to any type of radio (or wireless) cellular, or similar, network, in particular, GSM ("Global System for Mobile communications"), UMTS ("Universal Mobile Telecommunication System"), CDMA, CDMA 2000 (3GPP2), FDD ("Frequency Division Duplex"), TDD ("Time Division Duplex"), WiMAX, evolved-UTRAN (also known as LTE ("Long-Term Evolution")), and non-restrictively, certain FWA ("fixed wireless access") local area networks with lower mobility.

Furthermore, the term "radio terminal" as used herein refers to any type of fixed or mobile (or portable) communication terminal capable of exchanging data with a radio-communication network on a radio communication link. Consequently, it may be, among other things, a telephone or desktop computer connected to a local router or server and equipped with a radio communication interface; a mobile telephone; a laptop computer or personal digital assistant (or PDA) equipped with a radio communication interface; a server or local router equipped with a radio communication interface; a high-frequency radio receiver; or a terrestrial or satellite television receiver.

In third generation radio communication networks of the UMTS type, a high-speed data transmission functionality, referred to as HSDPA ("High Speed Downlink Packet Access"), is available in the downlink direction (from the UMTS radio access network to the radio terminals (also referred to as "user equipments"). An overview of this functionality may be found in the technical specification entitled "High Speed Downlink Packet Access (HSDPA); Overall description; Stage 2", 3GPP TS 25.308, Release 6, version 6.4.0, published in March 2007 by the 3GPP ("3^{rd} Generation Partnership Project").

HSDPA allows the transmission, by a base station, of data at high throughput downlink transport channel: the HS-DSCH ("High Speed - Downlink Shared Channel"), which are multiplexed on physical channels HS-PDSCH ("High Speed - Physical Downlink Shared Channel"). UMTS allows a TDD ("Time Division Duplex") and an FDD ("Frequency Division Duplex") mode. In the FDD mode, the characteristics of the HS-DSCH channel are in particular: (i) a transmission time interval (TTI) of 2 milliseconds corresponding to 3 time slots of 666 µs; (ii) hybrid data retransmission request processes of HARQ type ("Hybrid Automatic Repeat reQuest"); and (iii) an adaptive coding and modulation mechanism.

For HSDPA, at the access network level, a specific sub-layer of the medium access control protocol, MAC-hs ("Medium Access Control - high speed"), is localized in the base station. This layer receives data originating from the so-called MAC-d sub-layer localized, for its part, in the radio network controller RNC on which the base station depends. Thus, matters are arranged such as to offer an optimum throughput on the HS-DSCH channel. For the same reason, the HS-PDSCH uses a relatively low spreading factor, equal to 16. In a given cell and for a given scrambling code, up to 15 HS-PDSCH channels may be established using orthogonal variable spreading factor (OVSF) "channelization" codes. Details regarding medium access control may be found in the technical specification TS 25.321, Release 6, version 6.2.0, published in June 2004 by the 3GPP.

Radio terminals involved in HSDPA calls share a pool of CDMA radio resources such as HS-PDSCH codes and downlink transmit power on the radio interface, which sharing may be dynamic according to a dynamic resource allocation scheme (also known as scheduler) implemented in the base station. This renders the determination of an estimate of radio resources used by an established HSDPA call difficult. However, obtaining an estimate of radio resources effectively used for HSDPA calls in a cell is required in resource management functions such as call admission control.

Call admission control aims at authorizing the establishment of a new call together with allocating corresponding radio resources to such call depending on, *inter alia,* the amount of available radio resources. The effectiveness of such a procedure is therefore highly dependent upon the accuracy of the estimate of amount of available radio resources, for the purpose of deciding whether or not a requested new call can be admitted and therefore established with sufficient allocated radio resources. Such estimate of amount of available radio resources in a specific coverage area at a given time may typically be derived from the amount of maximum radio resources available for the coverage area and the amount of radio resources used at said given time. Determining such an estimate of amount of radio resources used at a given time by users who dynamically share a pool of radio resources is therefore desirable.

According to one broad aspect, the invention proposes a method for managing radio resources, in a radio-communication infrastructure network comprising a network element capable of controlling calls established between the infrastructure network and radio terminals, whereby at least some of the calls use transmission on shared communication channels.

The method comprises the steps of assigning a first weight factor to at least one established call which uses transmission on shared communication channels, wherein the first weight factor is selected according to the type of service provided and/or the user priority for the call, obtaining a first estimate value of radio resources used by the at least one established call from the first weight factor assigned to the call based on predetermined correspondences between weight factors and estimate values of radio resources required to service a call, and determining a second estimate value of radio resources used by established calls which use transmission on shared communication channels by using at least one obtained first estimate value of used radio resources.

The term "value of radio resources" as used herein does not necessarily refer to a one-dimensional parameter, and may refer to a multidimensional parameter. For instance, in the case of a CDMA radio-communication infrastructure network, a value of radio resources may comprise a pair of values representing the transmission power and the spreading factor codes, respectively.

In an embodiment, the method further comprises the steps of receiving a request for establishment of a new call, calculating an estimate value of radio resources available for the new call based on the second estimate value of radio resources used by established calls which use transmission on shared communication channels and allocating radio resources to the requested new call using the calculated estimate value of radio resources available for the new call.

In further embodiments, the method further comprises the steps of selecting a second weight factor for the new call according to the type of service requested and/or the user priority requested for the new call, obtaining an estimate value of radio resources required for the new call from the second weight factor based on the predetermined correspondences between weight factors and estimate values of radio resources required to service a call, and allocating radio resources to the requested new call based on a comparison between the estimate value of radio resources required for the new call and the estimate value of radio resources available for the new call.

In further embodiments, at least some of the calls controlled by the network element may use transmission on shared communication channels or transmission on dedicated communication channels. The method further comprises the steps of calculating the radio resources used by each established call which uses transmission on dedicated communication channels, combining the calculated used radio resources for each established call which uses transmission on dedicated communication channels together to determine a third estimate value of radio resources used by established calls which use transmission on dedicated communication channels and combining the third estimate of radio resources used by established calls which use transmission on dedicated communication channels with the estimate of radio resources used by established calls which use transmission on shared communication channels to determine a fourth estimate value of radio resources used by all established calls.

According to specific embodiments of the invention, the weight factor of a respective call is representative of the minimum throughput required for the respective call.

Furthermore, the radio-communication infrastructure network may be of the type that uses Code Division Multiple Access (CDMA), in which case an estimated value of radio resources may include a transmission power value and/or a code resource value.

This can be the case in particular for a radio-communication infrastructure network which comprises a UMTS radio access network (UTRAN), in which case said network element may advantageously be a Radio Network Controller of the UTRAN which supports HSDPA services (the HSDPA calls then being an example of calls which use transmission on shared communication channels). Examples of estimate values of radio resources processed by an RNC which support HSDPA services include a downlink transmission power value and an Orthogonal Variable Spreading Factor (OVSF) code resource value.

One of the advantages of such embodiments, in the case of the radio-communication infrastructure network is a CDMA network, is that the estimation guarantees enough codes available for the services within the shared transport channels, therefore providing for an improved management of resources. The call admission control function in the RNC estimates the amount of radio resources (including the channelization codes resources and the downlink transmit power resources) used by HSDPA calls, as such calls use shared radio resources, and also determines an estimate of radio resources used by calls on dedicated channels. An estimate of radio resources used by all calls established, for instance in a cell managed by the RNC, can be derived from the estimate for shared channel calls and the one for dedicated channel calls, thereby increasing the accuracy and the fairness of the admission control process for new calls.

In further embodiments, the method further comprises the steps of receiving, for at least one established call which uses transmission on shared communication channels, a measurement value of radio resources which would be used by the call in a situation where the call throughput would be no less than the minimum throughput required for the call and updating the second estimate value of radio resources used by established calls which use transmission on shared communication channels according to the received measurement value.

According to another broad aspect, the invention proposes a network element for managing radio resources in a radio-communication infrastructure network, the network element capable of controlling calls established between the infrastructure network and radio terminals, whereby at least some of the calls use transmission on shared communication channels.

The network element comprises means for assigning a first weight factor to at least one established call which uses transmission on shared communication channels, wherein the first weight factor is selected according to the type of service provided and/or the user priority for the call, means for obtaining a first estimate value of radio resources used by the at least one established call from the first weight factor assigned to the call based on predetermined correspondences between weight factors and estimate values of radio resources required to service a call, and means for determining a second estimate value of radio resources used by established calls which use transmission on shared communication channels by using at least one obtained first estimate value of used radio resources.

In an embodiment, the network element further comprises means for receiving a request for establishment of a new call, means for calculating an estimate value of radio resources available for the new call based on the second estimate value of radio resources used by established calls which use transmission on shared communication channels and means for allocating radio resources to the requested new call using the calculated estimate value of radio resources available for the new call.

In further embodiments, the network element further comprises means for selecting a second weight factor for the new call according to the type of service requested and/or the user priority requested for the new call, means for obtaining an estimate value of radio resources required for the new call from the second weight factor based on the predetermined correspondences between weight factors and estimate values of radio resources required to service a call, and means for allocating radio resources to the requested new call based on a comparison between the estimate value of radio resources required for the new call and the estimate value of radio resources available for the new call.

In further embodiments, at least some of the calls controlled by the network element may use transmission on shared communication channels or transmission on dedicated communication channels. The network element further comprises means for calculating the radio resources used by each established call which uses transmission on dedicated communication channels, means for combining the calculated used radio resources for each established call which uses transmission on dedicated communication channels together to determine a third estimate value of radio resources used by established calls which use transmission on dedicated communication channels, and means for combining the third estimate of radio resources used by established calls which use transmission on dedicated communication channels with the estimate of radio resources used by established calls which use transmission on shared communication channels to determine a fourth estimate value of radio resources used by all established calls.

In further embodiments, the network element further comprises means for receiving, for at least one established call which uses transmission on shared communication channels, a measurement value of radio resources which would be used by the call in a situation where the call throughput would be no less than the minimum throughput required for the call, and means for updating the second estimate value of radio resources used by established calls which use transmission on shared communication channels according to the received measurement value.

In further embodiments, the weight factor of a respective call is representative of the minimum throughput required for the respective call.

In further embodiments, the minimum throughput required for an interactive or background service call is derived from a user priority and a quality of service (QoS) required for the call.

In further embodiments, the radio-communication infrastructure network uses Code Division Multiple Access (CDMA), and an estimated value of radio resources includes a transmission power value and/or a code resource value.

In further embodiments, the radio-communication infrastructure network comprises a UMTS radio access network (UTRAN), wherein the network element is a Radio Network Controller of the UTRAN which supports HSDPA services, wherein calls which use transmission on shared communication channels are HSDPA calls, and wherein the estimated value of radio resources includes a downlink transmission power value and an Orthogonal Variable Spreading Factor (OVSF) code resource value.

In further embodiments, the radio-communication infrastructure network further comprises a core network connected to the UMTS radio access network, and the minimum throughput required for a streaming service is determined as a function of a Guaranteed Bit Rate (GBR) request received from the core network.

According to another broad aspect, the invention proposes a computer program product stored on a storage medium, comprising executable program means for causing an information processor within a network element to perform a method according to any of the preceding embodiments when the program is run on the network element.

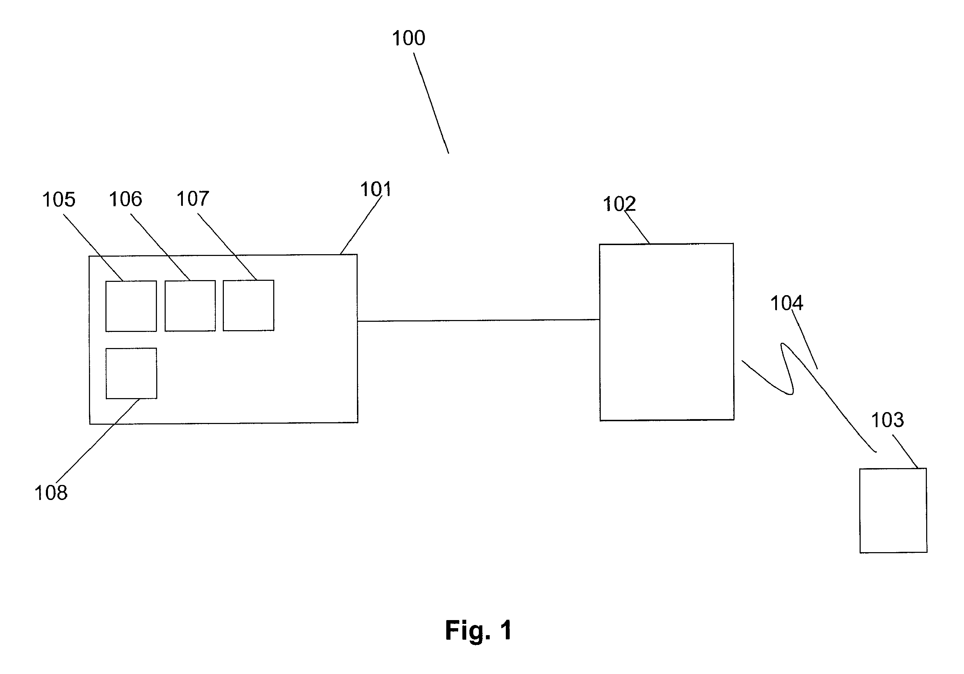

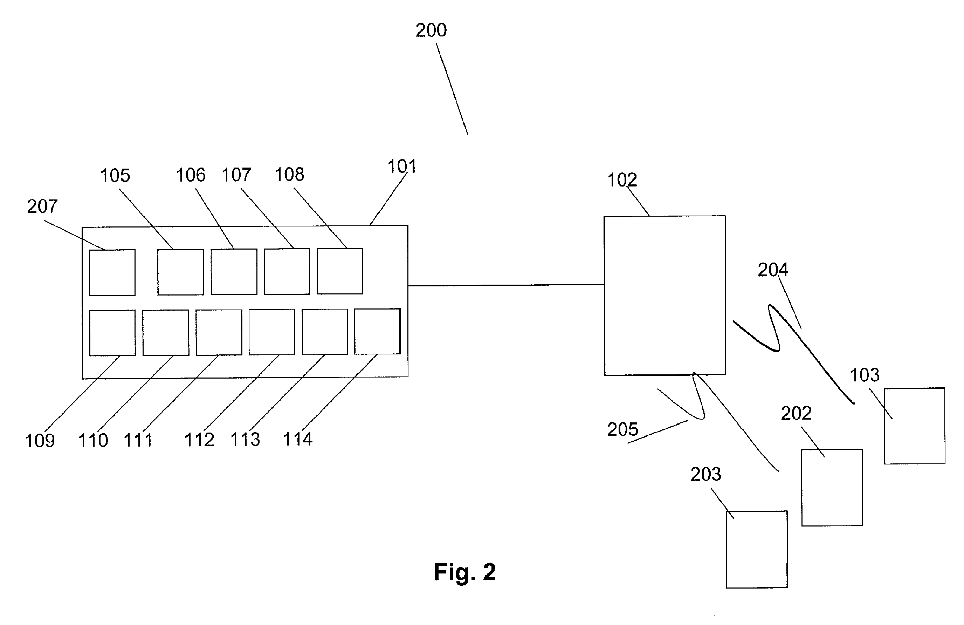

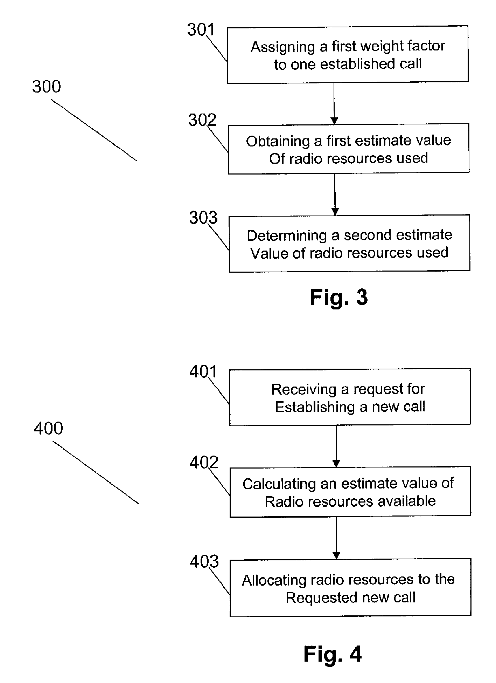

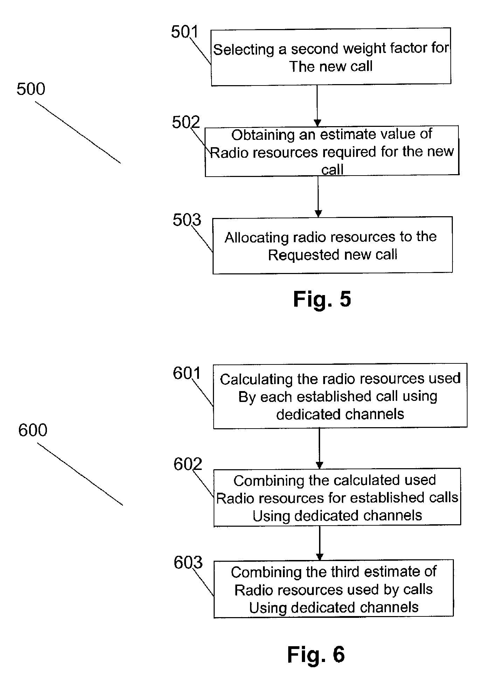

In the following preferred embodiments of the invention will be described in greater detail by way of example only making reference to the drawings in which:
● Figure 1 shows an example of a first radio-communication network in which the present invention may be embodied,
● Figure 2 shows a second example of a radio-communication network in which the present invention may be embodied,
● Figure 3 shows a flowchart of a method according to an embodiment,
● Figure 4 shows a second flowchart of a method according to an embodiment,
● Figure 5 shows a third flowchart of a method according to an embodiment,
● Figure 6 shows a fourth flowchart of a method according to an embodiment

The word "exemplary" is used exclusively herein to mean "serving as an example, instance, or illustration." Any embodiment described herein as "exemplary" is not necessarily to be construed as preferred or advantageous over other embodiments. Note that the exemplary embodiments are provided as an exemplar throughout this discussion; however, alternate embodiments may incorporate various aspects without departing from the scope of the present invention.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Moreover, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the present description, the invention will be described more particularly in its application, non limiting, to third generation radio communication networks of the UMTS type which provides data communication according to the HSDPA service, without thereby restricting the generality of its subject matter.

Fig. 1 shows a radio-communication network 100 of the UMTS type comprising control equipments 101, or "Radio Network Controller" (RNC). Each RNC 101 is coupled to one or several base station (also called, in a UMTS radio access network, "Node-B") 102, by means of an interface referred to as *lub* interface. The Node-Bs 102, which are distributed over the geographical area covered by the network 100, are capable of communicating via the radio interface 104 with radio terminals 103, referred to as UE ("User Equipments"). The Node-Bs 102 may each provide radio coverage in one or several cells by means of respective transmiter-receiver equipments. Some RNCs 101 may further communicate with each other by means of an interface referred to as the lur interface. The network formed by the RNCs 101 and the Node-Bs 102 is a radio access network referred to as UTRAN ("UMTS Terrestrial Radio Access Network"). The UTRAN is typically coupled to a network of mobile service switches (referred to as "Core Network" (CN)) via some RNCs 101, by means of an interface referred to as the lu interface. The core network may in turn be coupled to one or several fixed networks.

The RNC 101 is capable of controlling calls between the UTRAN and the UEs which use dedicated communication channels (also called hereinafter « DCH calls »), such as the DCH transport channel ("Dedicated Transport Channel"). The RNC 101 is also capable of controlling calls between the UTRAN and the UEs in the downlink direction according to the HSDPA service (also called hereinafter "HSDPA calls"), which calls use a shared communication channel referred to as HS-DSCH ("High Speed Downlink Shared Channel"). A detailed description of transport channels used in a UMTS system Release 6, among which in particular the dedicated communication channel DCH and the shared communication channel HS-DSCH, can be found in the specification 3GPP TS 25.211, entitled "Physical channels and mapping of transport channels onto physical channels (FDD), Release 6", version 6.9.0., published by the 3GPP in November 2007, and in the specification 3GPP TS 25.302, entitled "Services provided by the physical layer (Release 6)", version 6.8.0., published by the 3GPP in September 2006.

One of the functions of the radio network controller (RNC) 101 is to apply call admission control on new calls. The call admission control (CAC) process is executed whenever a request for a new call is received and processed by the RNC 101. The CAC process typically takes into account the available radio resources at the time the request for the new call is being processed. At any time, the radio network controller 101 is able to estimate the amount of resources allocated to the already established calls, and in particular those that are using shared communication channels, e.g. calls established in accordance with the HSDPA service. On calls using dedicated channels (DCH), the resources are not shared between radio terminals, but instead allocated for the entire duration of the call during the call establishment procedure. For example, for each call that uses a DCH transport channel, one orthogonal variable spreading factor (OVSF) code is allocated and a certain amount of transmission power is reserved and configured. The amount of allocated resources depends on a throughput value selected when the service corresponding to the DCH call is configured.

For calls using shared communication channels (e.g. HSDPA calls), the resources are shared with other calls using shared communication channels, and all radio terminals located in a given location area which are involved in calls using shared communication channels share dynamically the transmission power resources and the orthogonal variable spreading factor (OVSF) codes resources that are available in the location area. For instance, in a UMTS system providing HSDPA calls to radio terminals in a cell, the HSDPA calls established for terminals in the cell will dynamically share radio resources (and in particular OVSF codes and downlink transmission power), and the allocation of radio resources to each call will evolve over time, potentially at each transmission time interval (TTI). The RNC 101, in charge of the call admission control (CAC), takes into consideration the available radio resources based on the resources in use by the dedicated channel calls and the shared channel calls.

The network element 101 comprises means for 105 assigning a first weight factor to at least one established call adapted for using transmission on shared communication channels, means for 106 obtaining a first estimate value of radio resources used by said at least one established call from the first weight factor assigned to the call based on predetermined correspondences between weight factors and estimate values of radio resources required to service a call, and means for 107 determining a second estimate value of radio resources used by established calls which use transmission on shared communication channels by using at least one obtained first estimate value of used radio resources.

The predetermined correspondences between weight factors and estimate values of radio resources required to service a call may be kept in memory in a look-up table, created during system configuration. In a specific implementation, this correspondence table can be kept in memory means which are included in the RNC 101. Otherwise such table may be accessible to the RNC 101 via an Operation & Maintenance subsystem and associated tools and configuration utilities.

The first weight factor is selected according to the type of service provided and/or the user priority for the call. The established call using shared communication channels may be one of streaming, conversational, interactive and background (I/B) calls. For instance, the first weight factor selected for an I/B ("Interactive & Background") call may be different from the one selected for a call supporting a streaming service. The first weight factor selected by the RNC 101 for an established call using shared communication channels such as an HSDPA call can be chosen as a parameter which represents a minimum throughput (e.g. a minimum bit-rate) required for the call.

For interactive and background services, this minimum bitrate factor is for example selected based on the priority level of the subscriber and the quality of service (QoS) of the requested service.

For streaming and conversational services, the minimum bit-rate factor is for example selected to match a guaranteed bit-rate (GBR) parameter value for the call that the RNC 101 receives from a core network node, possibly with an additional margin.

Once the first weight factor is selected for an established call using shared communication channels based on attributes of said call such as the type of service provided and/or the user priority of the call, a first estimate value of radio resources used by said established call is obtained by determining in the look-up table the estimate value that corresponds to the first weight factor.

A second estimate value of radio resources used by established calls which use transmission on shared communication channels is determined by using a first estimate value of used radio resources. This might be achieved in several ways: for example, one may determine such second estimate value by multiplying the first estimate value by the number of calls established in a cell which use transmission on shared communication channels. Another possibility is to determine a first estimate for each of part or all of the calls established in a cell which use transmission on shared communication channels, and combine together the obtained first estimate values to determine an estimate value for said part or all of the calls. Another possibility is to combine all the obtained first estimate values and multiplying the average by the number of established calls.

Fig. 2 shows a radio-communication network 200 comprising the radio network controller 101 coupled to the Node B 102. The Node B 102 is coupled to three radio terminals 103, 202 and 203. The Node B communicates with the radio terminals using a dedicated channel 204 or a shared channel 205.

The radio network controller 101 of the radio-communication network 200 comprises all the means already mentioned for the radio network controller of the radio-communication network 100. The radio network controller 101 further comprises means for 109 receiving a request for establishment of a new call, means for 110 calculating an estimate value of radio resources available for the new call based on the second estimate value of radio resources used by established calls which use transmission on shared communication channels, and means for 111 allocating radio resources to the requested new call using the calculated estimate value of radio resources available for the new call.

The radio network controller 101 also comprises means for 112 selecting a second weight factor for the new call according to the type of service requested and/or the user priority requested for the new call, means for 113 obtaining an estimate value of radio resources required for the new call from said second weight factor based on said predetermined correspondences between weight factors and estimate values of radio resources required to service a call, and means for 114 allocating radio resources to the requested new call based on a comparison between the estimate value of radio resources required for the new call and the estimate value of radio resources available for the new call.

When a request for a new call is received by the RNC 101, the call admission control function initiates its process by first determining an estimate of the radio resources that are currently used in a specific coverage area or a cell in which calls are controlled by the RNC 101. Determining an estimate of the radio resources that will be required by the new call given its attributes is also necessary.

A second weight factor is selected for the requested new call in order to estimate the radio resources that would be required by the call once established. The estimates of radio resources that would be required by the call once established are derived from this second weight factor based on the already mentioned predetermined correspondences. For instance, the same look-up table as the one described above may be used to obtain the estimate value from the weight factor selected for the new call.

According to a specific embodiment, the second weight factor represents a minimum bit-rate to achieve. In such case, one considers that the resources reserved for a given call for HSDPA are accurately enough reflected in an estimate of the resources needed to ensure the minimum bit-rate value which is represented by the weight factor.

The call admission control (CAC) function in the radio network controller 101 can then allocate both HSDPA calls (shared channel calls) and DCH calls (dedicated channel calls) from a single shared pool of radio resources (power and codes), and reserve an amount of resources for each HSDPA established call (which the RNC also does for each DCH established call), which is a function of the bitrate needed for the service. The amount of reserved resources is derived from this weight factor which represents a minimum bit-rate in all circumstances, therefore aiming at guaranteeing this minimum bit-rate, including when there is a congestion situation on the radio interface.

In order to estimate the amount of downlink transmit power resources which should be reserved for a new HSDPA call, the RNC 101 estimates the downlink power needed to achieve the bit-rate associated to the call. According to a specific embodiment, the RNC 101 may also utilize some of the required power estimates determined from radio measurements implemented at the Node-B 102 level which are periodically transmitted by the Node-B 102 to the RNC 101. Those transmit power estimates provided by the Node-B 102 represent the transmit power resources that would be required by the Node-B 102 to achieve the minimum bit-rate associated with the new HSDPA call, given the then current load of the Node-B 102 and attributes of the radio terminal for which the new HSDPA call is requested, such as the distance between said radio terminal and the Node-B 102. The RNC 101 can use these estimates provided by the Node-B 102 to update its initial estimate which was determined using the second weight factor and the above-described predetermined correspondences. This also ensure a continuous correction of the estimates on which the RNC 101 bases its CAC procedure, and ensure that the reserved downlink transmit power allocated to the new call is sufficient to achieve at least the minimum bit-rate associated with the call.

The determination of the estimate of code resources required for the new HSDPA call or for an already established call is also based on the knowledge of number of OVSF codes necessary to achieve the minimum bit-rate associated with the call.

The RNC 101 then holds for the CAC procedure an estimate of the radio resources used by calls in a specific coverage area (e.g. a cell), and an estimate of the radio resources (downlink transmit power and OVSF codes) required for the new requested call. The RNC 101 also knows the maximum radio resources available in the coverage area (maximum number of OVSF codes in the pool of available codes) and maximum downlink transmit power available for all types of call in the coverage area, and can deduce from that value and the estimate of the radio resources used by all established calls in the coverage area, the amount of available radio resources for allocation to the requested new call. By comparison of this amount of available resources for allocation to the requested new call with the estimate of the radio resources required for the new call (which can be an HSDPA call on shared channels or a DCH call on dedicated channels), the admission control procedure may be completed and lead to a decision to accept the new call and allocate the radio resources (which will, according to a specific embodiment, ensure a minimum bit-rate level to the call) to the new call or else refuse the establishment of the new call.

Fig. 3 shows a flowchart 300 of a method for managing radio resources in a radio communication network comprising a network element capable of controlling calls established between the network and radio terminals. Some of the calls use transmission on shared communication channel. The method comprises: assigning a first weight factor to at least one established call which uses transmission on shared communication channels, wherein said first weight factor is selected according to the type of service provided and/or the user priority for the call in a first step 301; obtaining a first estimate value of radio resources used by said at least one established call from the first weight factor assigned to the call based on predetermined correspondences between weight factors and estimate values of radio resources required to service a call in a second step 302; and determining a second estimate value of radio resources used by established calls which use transmission on shared communication channels by using at least one obtained first estimate value of used radio resources in a third step 303.

Fig 4. shows a flowchart 400 of a method for managing radio resources in a radio communication network comprising a network element capable of controlling calls established between the network and radio terminals. The flowchart 400 is a continuation of the method steps of flowchart 300. The method comprises: receiving a request for establishment of a new call in a first step 401; calculating an estimate value of radio resources available for the new call based on the second estimate value of radio resources used by established calls which use transmission on shared communication channels in a second step 402; allocating radio resources to the requested new call using the calculated estimate value of radio resources available for the new call in a third step 403.

Fig. 5 shows a flowchart 500 with steps which may be implemented as a continuation of the steps described in the flowchart 300 or in the flowchart 400. The new call request is for a call using transmission on shared communication channels. The flowchart 500 comprises: selecting a second weight factor for the new call according to the type of service requested and/or the user priority requested for the new call in a first step 501; obtaining an estimate value of radio resources required for the new call from said second weight factor based on said predetermined correspondences between weight factors and estimate values of radio resources required to service a call in a second step 502; allocating radio resources to the requested new call based on a comparison between the estimate value of radio resources required for the new call and the estimate value of radio resources available for the new call in a third step 503.

Fig. 6 shows a flowchart 600 with steps which may be implemented as a continuation of any of the steps described in the previously described flowcharts 300, 400 or 500. At least some of the calls controlled by the network element may use transmission on shared communication channels or transmission on dedicated communication channels. The method comprises: calculating the radio resources used by each established call which uses transmission on dedicated communication channels in a first step 601; combining said calculated used radio resources for each established call which uses transmission on dedicated communication channels together to determine a third estimate value of radio resources used by established calls which use transmission on dedicated communication channels in a second step 602; combining the third estimate of radio resources used by established calls which use transmission on dedicated communication channels with the estimate of radio resources used by established calls which use transmission on shared communication channels to determine a fourth estimate value of radio resources used by all established calls in a third step 603.

The flowchart 600 may further comprise (not depicted in the figure 6) the following steps: receiving, for at least one established call which uses transmission on shared communication channels, a measurement value of radio resources which would be used by said call in a situation where the call throughput would be no less than the minimum throughput required for the call; and updating the second estimate value of radio resources used by established calls which use transmission on shared communication channels according to the received measurement value..

In some specific embodiments, the weight attributed to the call may be seen as a minimum throughput (for instance a minimum bit rate) which depends on the requested services and the priority of the user of the radio terminal. The resources reserved for a given call over a shared channel, such as an HSDPA call, are then considered to correspond to the resources that are needed to ensure the minimum bit rate. As a consequence, the call admission control allocates shared channel calls and dedicated channel calls into a single shared pool of resources, including transmission power and spreading factor codes, and reserves an amount of resources for each shared channel established call. In this embodiment the resources are a function of the bit rate needed for the service.

For interactive and background services, the bit rate may be derived from a minimum bit rate that depends on a priority level of the radio terminal and the quality of service of the requested service. For streaming traffic and/or conversational traffic, the bit rate is directly guaranteed bit rate requested by the core network. The guaranteed bit rate may include an additional margin.

The network element or the radio network controller may first estimate the downlink power needed to achieve the bit rate associated to each call. Then, the network element uses the base station or Node B feedback in order to readjust the first estimation and to guarantee enough power reserved to achieve the bit rate associated to each call. As it has been already mentioned, the dedicated channel calls and the shared channel calls use a single pool of orthogonal variable spreading factors (OVSF) codes. The radio network controller estimates the number of OVSF codes needed to achieve the bit rate associated to each call.

The estimation is completed in order to guarantee enough OVSF codes available for the shared channels established services. Using this information, the network element can estimate the remaining resources, including the number of spreading factor 16 codes and the downlink power, that could be allocated to new radio terminals. The network element takes into account the estimated radio resources consumption of the calls established over shared channels. In a UMTS system which includes the HSDPA functionality, these resources cannot be utilized by dedicated channel calls (calls on a DCH channel). The call admission control procedure accomplishes a more accurate and fair distribution of resources between the dedicated channels and the shared channels calls.

The RNC 101 may further comprises a computer program product 108 stored on a storage medium, comprising executable program means for causing an information processor within the RNC 101 to perform a method according to any of the embodiments described above when the program is run on the RNC 101.

### List of Reference Numerals

| | |
|---|---|
| 100 | First radio communications network |
| 101 | Radio Network Controller |
| 102 | Base station |
| 103 | Radio terminal |
| 104 | Communications channel |
| 105 | Means for assigning |
| 106 | Means for obtaining |
| 107 | Means for determining |
| 108 | Computer Program Product |
| 109 | Means for receiving |
| 110 | Means for calculating |
| 111 | Means for allocating |
| 112 | Means for selecting |
| 113 | Means for obtaining |
| 114 | Means for allocating |
| 200 | Second radio network |
| 201 | Radio terminal |
| 202 | Radio terminal |
| 204 | Shared channel |
| 205 | Dedicated channel |
| 300 | Flowchart |
| 301 | First step |
| 302 | Second step |
| 303 | Third step |
| 400 | Flowchart |
| 401 | First step |
| 402 | Second step |
| 403 | Third step |
| 500 | Flowchart |
| 501 | First step |
| 502 | Second step |
| 503 | Third step |
| 600 | Flowchart |
| 601 | First step |
| 602 | Second step |
| 603 | Third step |

## Claims

1. A method for managing radio resources, in a radio-communication infrastructure network comprising a network element capable of controlling calls established between the infrastructure network and radio terminals, whereby at least some of said calls use transmission on shared communication channels, the method comprising the following steps:
- assigning a first weight factor to at least one established call which uses transmission on shared communication channels, wherein said first weight factor is selected according to the type of service provided and/or the user priority for the call;
- obtaining a first estimate value of radio resources used by said at least one established call from the first weight factor assigned to the call based on predetermined correspondences between weight factors and estimate values of radio resources required to service a call;
- determining a second estimate value of radio resources used by established calls which use transmission on shared communication channels by using at least one obtained first estimate value of used radio resources.

2. A method according to claim 1, further comprising the following steps:
- receiving a request for establishment of a new call;
- calculating an estimate value of radio resources available for the new call based on the second estimate value of radio resources used by established calls which use transmission on shared communication channels;
- allocating radio resources to the requested new call using the calculated estimate value of radio resources available for the new call.

3. A method according to claim 2, wherein the new call request is for a call that uses transmission on shared communication channels, the method further comprising the following steps:
- selecting a second weight factor for the new call according to the type of service requested and/or the user priority requested for the new call;
- obtaining an estimate value of radio resources required for the new call from said second weight factor based on said predetermined correspondences between weight factors and estimate values of radio resources required to service a call;
- allocating radio resources to the requested new call based on a comparison between the estimate value of radio resources required for the new call and the estimate value of radio resources available for the new call.

4. A method according to any of the previous claims, wherein at least some of the calls controlled by the network element may use transmission on shared communication channels or transmission on dedicated communication channels, the method further comprising the steps of:
- calculating the radio resources used by each established call which uses transmission on dedicated communication channels;
- combining said calculated used radio resources for each established call which uses transmission on dedicated communication channels together to determine a third estimate value of radio resources used by established calls which use transmission on dedicated communication channels;
- combining the third estimate of radio resources used by established calls which use transmission on dedicated communication channels with the estimate of radio resources used by established calls which use transmission on shared communication channels to determine a fourth estimate value of radio resources used by all established calls.

5. A method according to any of the previous claims, the method further comprising the following steps:
- receiving, for at least one established call which uses transmission on shared communication channels, a measurement value of radio resources which would be used by said call in a situation where the call throughput would be no less than the minimum throughput required for the call;
- updating the second estimate value of radio resources used by established calls which use transmission on shared communication channels according to the received measurement value.

6. A method according to any of the previous claims, wherein the weight factor of a respective call is representative of the minimum throughput required for the respective call.

7. A method according to claim 6, wherein the minimum throughput required for an interactive or background service call is derived from a user priority and a quality of service (QoS) required for the call.

8. A method according to any of the previous claims, wherein said radio-communication infrastructure network uses Code Division Multiple Access (CDMA), and wherein an estimated value of radio resources includes a transmission power value and/or a code resource value.

9. A method according to claim 8, wherein said radio-communication infrastructure network comprises a UMTS radio access network (UTRAN), wherein said network element is a Radio Network Controller of the UTRAN which supports HSDPA services, wherein calls which use transmission on shared communication channels are HSDPA calls, and wherein the estimated value of radio resources includes a downlink transmission power value and an Orthogonal Variable Spreading Factor (OVSF) code resource value.

10. A method according to any one of claims 7 to 9, wherein said radio-communication infrastructure network further comprises a core network connected to the UMTS radio access network, and wherein the minimum throughput required for a streaming service is determined as a function of a Guaranteed Bit Rate (GBR) request received from the core network.

11. A network element for managing radio resources for a radio-communication infrastructure network, the network element capable of controlling calls established between the infrastructure network and radio terminals, whereby at least some of said calls use transmission on shared communication channels, the network element comprising:
- means for assigning a first weight factor to at least one established call adapted for using transmission on shared communication channels, wherein said first weight factor is selected according to the type of service provided and/or the user priority for the call;
- means for obtaining a first estimate value of radio resources used by said at least one established call from the first weight factor assigned to the call based on predetermined correspondences between weight factors and estimate values of radio resources required to service a call;
- means for determining a second estimate value of radio resources used by established calls which use transmission on shared communication channels by using at least one obtained first estimate value of used radio resources.

12. The network element of claim 11 further comprising:
- means for receiving a request for establishment of a new call;
- means for calculating an estimate value of radio resources available for the new call based on the second estimate value of radio resources used by established calls which use transmission on shared communication channels;
- means for allocating radio resources to the requested new call using the calculated estimate value of radio resources available for the new call.

13. The network element of claim 12, wherein the new call request is for a call that uses transmission on shared communication channels, the method further comprising the following steps:
- means for selecting a second weight factor for the new call according to the type of service requested and/or the user priority requested for the new call;
- means for obtaining an estimate value of radio resources required for the new call from said second weight factor based on said predetermined correspondences between weight factors and estimate values of radio resources required to service a call;
- means for allocating radio resources to the requested new call based on a comparison between the estimate value of radio resources required for the new call and the estimate value of radio resources available for the new call.

14. The network element of any of the claims 12 and 13, wherein at least some of the calls controlled by the network element may use transmission on shared communication channels or transmission on dedicated communication channels, the method further comprising the steps of:
- means for calculating the radio resources used by each established call which uses transmission on dedicated communication channels;
- means for combining said calculated used radio resources for each established call which uses transmission on dedicated communication channels together to determine a third estimate value of radio resources used by established calls which use transmission on dedicated communication channels;
- means for combining the third estimate of radio resources used by established calls which use transmission on dedicated communication channels with the estimate of radio resources used by established calls which use transmission on shared communication channels to determine a fourth estimate value of radio resources used by all established calls.

15. A computer program product stored on a storage medium, comprising executable program means for causing an information processor within a network element to perform a method according to any of the preceding claims 1 to 10 when the program is run on the network element.
